# EUROPÄISCHE PATENTANMELDUNG

(11) **EP 1 810 879 A1**
(43) Veröffentlichungstag der Anmeldung: **25.07.2007**
(21) Anmeldenummer: 06025754.0
(22) Anmeldetag: 13.12.2006
(51) Int. Cl.: B60P 7/13, B65D 90/00

(54) **Vorrichtung zur Betätigung einer Verriegelung eines Verriegelungskopfes mit einem Eckbeschlag eines Containers**

(30) Priorität: 19.01.2006 DE 102006002654
(71) Anmelder: 1. RMM Entwicklungsgesellschaft mbH & Co. KG, 21244 Buchholz i.d.N. (DE)
(72) Erfinder: Metternich, Heinz Rüdiger, 21244 Buchholz i.d.N. (DE)
(74) Vertreter: Glaeser, Joachim

(57) **Zusammenfassung**

Die Erfindung bezieht sich auf eine Vorrichtung zur Betätigung einer Verriegelung eines Verriegelungskopfes auf einem Fahrzeug mit einem Eckbeschlag eines zu transportierenden Containers. Eine pneumatische Kolbenzylinderanordnung, deren Kolbenstange mit den Klauen des Verriegelungskopfes antriebsmäßig verbunden ist, bringt diese aus der eingefahrenen Lage (Fig. 1) in die ausgefahrene Lage (Fig. 2) und von dort in die Riegelstellung (Fig. 3) und wieder zurück. An der Kolbenstange (10) ist ein Schieber (13) angebracht. Der Schieber überträgt die Bewegungen auf die Klauen (171), um Axialbewegungen in Vertikalbewegungen umzuwandeln.

## Beschreibung

Die Erfindung bezieht sich auf eine Vorrichtung zur Betätigung einer Verriegelung eines Verriegelungskopfes auf einem Fahrzeug mit einem Eckbeschlag eines zu transportierenden Containers, aufweisend eine pneumatische Kolbenzylinderanordnung, deren Kolbenstange mit den Klauen des Verriegelungskopfes antriebsmäßig verbunden ist, um diese aus der eingefahrenen Lage (Fig. 1) in die ausgefahrene Lage (Fig. 2) und von dort in die Riegelstellung (Fig. 3) und wieder zurückzubringen.

Es gibt eine Vielzahl derartiger Verriegelungen, die entweder von Hand in die entsprechenden Stellungen gebracht werden oder mit Hilfe von Pneumatikeinrichtungen betätigt werden können. Bei einem Verriegelungskopf, bei dem Klauen im Korpus des Verriegelungskopfes angeordnet sind, sind komplizierte Bewegungsvorgänge zu bewerkstelligen. So sind die Klauen nach außen auszufahren und sodann abzusenken, um den Eckbeschlag eines Containers auf der Ladefläche eines Fahrzeuges zu haltern. Entsprechend müssen auch die umgekehrten Bewegungen durchgeführt werden, nämlich die Klauen aus der Verriegelungslage gebracht, nach oben bewegt und schließlich in die eingefahrene Lage zurückgebracht werden.

Der vorliegenden Erfindung liegt die Aufgabe zu Grunde, eine Betätigung einer Verriegelungseinrichtung der eingangs genannten Art mit Hilfe einer einzigen Pneumatikeinrichtung zu bewerkstelligen. Erreicht wird dies bei der Vorrichtung der eingangs genannten Art dadurch, dass an der Kolbenstange in axialer Verlängerung ein Schieber angebracht ist, der in Ausfahrrichtung der Kolbenstange die Klauen aus der eingefahrenen Lage nach außen und sodann nach unten drückt, wobei die Klauen und der Schieber über Nocken und Nockenspuren im Eingriff sind, um Axialbewegungen in Vertikalbewegungen umzuwandeln.

Das Prinzip der vorliegenden Erfindung beruht darauf, dass zwischen dem freien Ende einer Kolbenstange einer pneumatischen Kolbenzylinderanordnung und den Klauen eines Verriegelungskopfes ein Mechanismus eingesetzt wird, der die hin- und hergehenden Bewegungen der Kolbenstange in die entsprechenden Anhebe-, Absenk- und Ausfahrbewegungen übersetzt, ohne dass hierzu zusätzliche Antriebsmittel eingesetzt werden müssen, insbesondere auch keine Federn oder dergleichen erforderlich sind.

Die Erfindung wird nachstehend anhand der Zeichnungen beispielsweise erläutert.

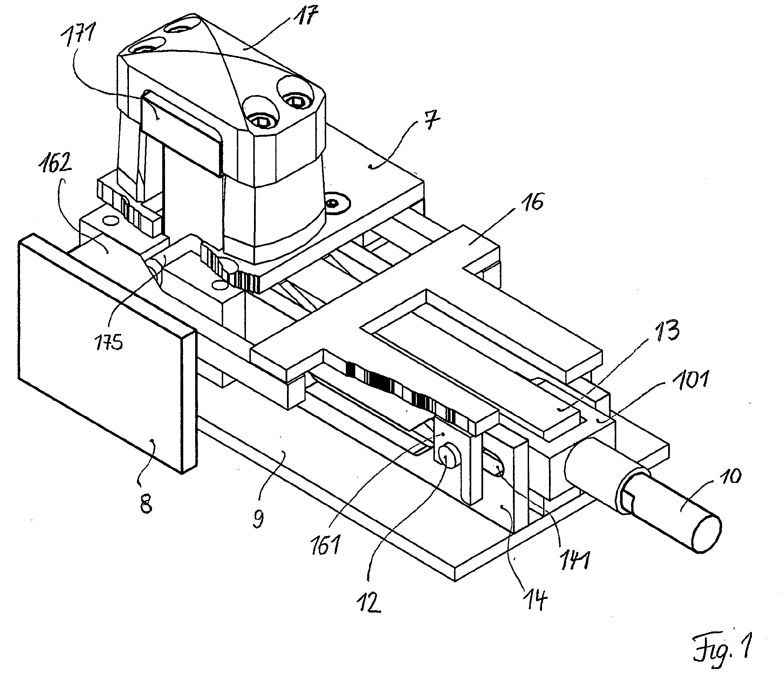

- Fig. 1: zeigt eine schaubildliche Ansicht der Vorrichtung gemäß der Erfindung im Normalzustand, das heißt in der Lage, in der kein Container aufgenommen worden ist und der Verriegelungskopf nicht aktiv ist.
- Fiig. 2: zeigt eine entsprechende Ansicht, jedoch sind nunmehr die Spannteile des Verriegelungskopfes ausgefahren.

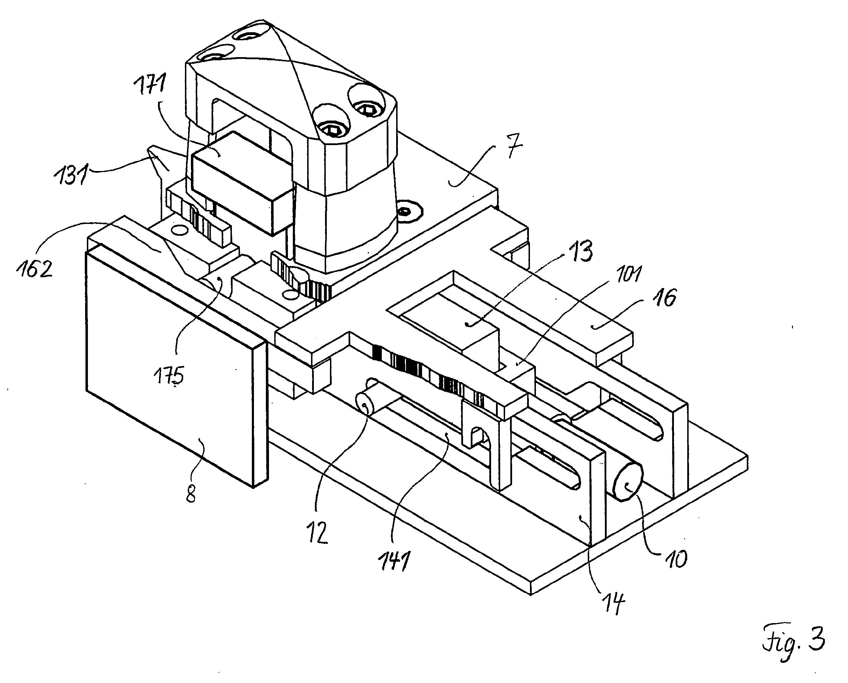

- Fig. 3: zeigt eine entsprechende Ansicht in dem Zustand der Vorrichtung gemäß der Erfindung, in dem ein Container an einem Fahrzeug verriegelt worden ist.

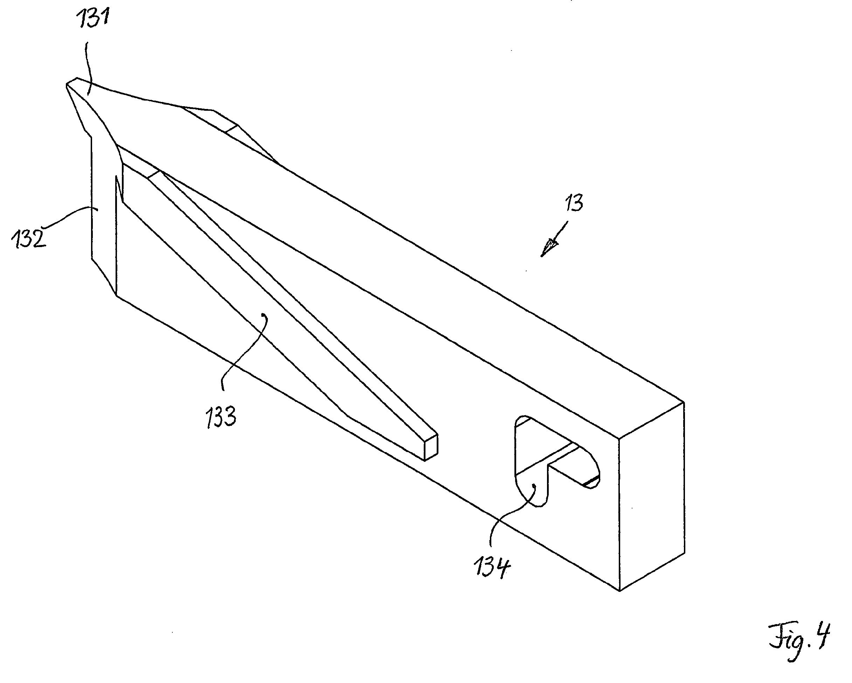

- Fig. 4: zeigt eine schaubildliche Ansicht des Schiebers der Vorrichtung gemäß der Erfindung.

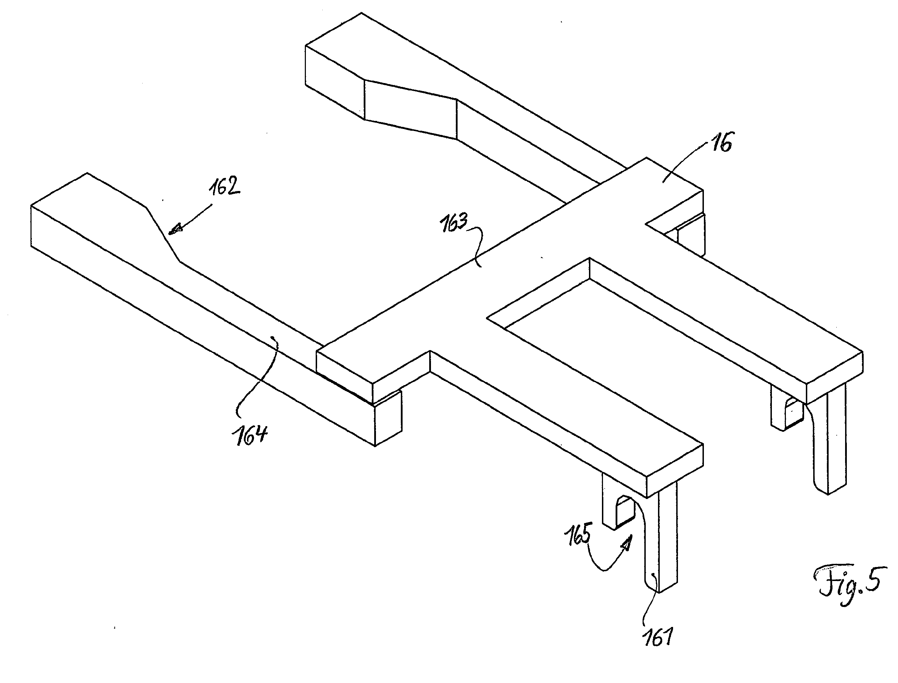

- Fig. 5: zeigt eine schaubildliche Ansicht der Führungsgabel der Vorrichtung gemäß der Erfindung.

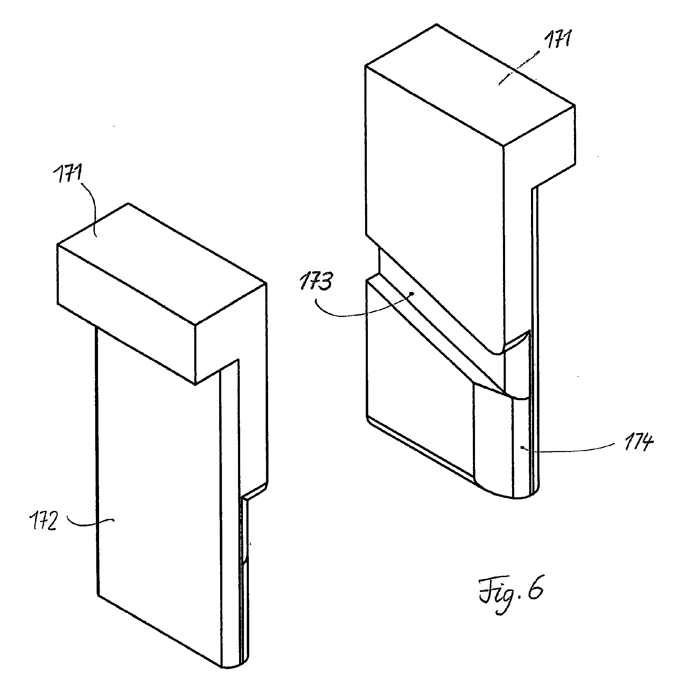

- Fig. 6: zeigt die beiden Klauen des Verriegelungskopfes.

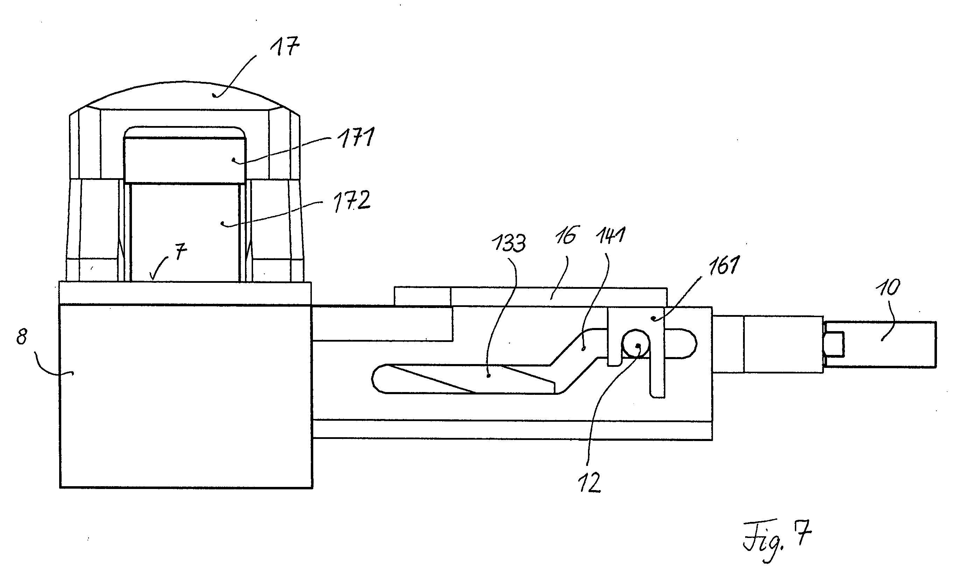

- Fig. 7: zeigt eine Seitenansicht der Vorrichtung gemäß der Erfindung in der in Figur 1 gezeigten Betriebsstellung.

In den Figuren 1 bis 3 und 7 ist eine Vorrichtung gemäß der Erfindung gezeigt, die mit einem Verriegelungskopf 17 ausgestattet ist. Verriegelungsköpfe dieser Art sind bekannt, sie bestehen für gewöhnlich aus einem einzigen Stück und haben eine Flachquaderform, jedoch mit starken Abrundungen, insbesondere im oberen Bereich. Die Verriegelungsköpfe 17 sind fest auf einer Lastauflagefläche 7 eines Fahrzeugs angebracht und stehen im Bereich zwischen 60 und 70 mm von der Lastauflagefläche 7 nach oben vor. In Figur 1 ist zu erkennen, dass bei der Vorrichtung gemäß der Erfindung der Verriegelungskopf 17 mehrteilig ausgebildet ist und es ist auch zu erkennen, dass er über vier Innensechskantbolzen mit dem Lastauflager verschraubt ist.

Bei der vorliegenden Erfindung ist der Verriegelungskopf zu beiden Seiten mit Ausnehmungen ausgestaltet, die sich über die Höhenerstreckung bis in den eigentlichen Kopf hineinerstrecken. Auf diese Art und Weise sind zwei Räume zur Aufnahme jeweils eines Klemmteiles oder einer Klaue 171 geschaffen worden. Figur 6 zeigt die schaubildliche Anordnung dieser beiden Klauenteile 171. Es handelt sich im wesentlichen um Flachwerkstücke, die im oberen Bereich jeweils mit einem Vorsprung ausgebildet sind. Es wird die Funktion der Klauen 171 nachfolgend beschrieben, schon jetzt sei darauf hingewiesen, dass die Vorsprünge dazu dienen, im Inneren eines Eckbeschlages die Durchgangsöffnung des Eckbeschlages zu hintergreifen, um den Eckbeschlag und damit den Container zu haltern.

An den Außenflächen sind die Klauen mit ebenen Flächen 172 ausgestattet, die mit Stiften 175 zusammenarbeiten können, um die Klauen entweder in der Umschließungslage im Verriegelungskopf 17 anzuordnen oder aber das seitliche Ausfahren der Klauen 171 zu erlauben. Auch diese Funktionsweise wird nachfolgend erläutert.

Es sei darauf hingewiesen, dass an der Innenseite der Klauen 171 schräg verlaufende Nockenspuren 173 ausgebildet sind und es ist schließlich festzuhalten, dass an der rechtsseitigen Begrenzung der Klauenteile 171 Abrundungen 174 vorgesehen sind. Es handelt sich hierbei um Flächen, die mit einem Schieber 13 bzw. dessen Stirnflächen 131, 132 zusammenarbeiten sollen, was nachfolgend noch beschrieben wird.

Unterhalb der Lastauflagefläche 7 befindet sich eine Montageplatte 9 und auf dieser sind die einzelnen Funktionselemente der Vorrichtung gemäß der Erfindung angeordnet und zum Teil dort befestigt.

Von der Montageplatte 9 stehen zwei Stegplatten 14 nach oben hervor, wobei in den Figuren lediglich die vordere Stegplatte mit einer Bezugszahl versehen ist. Die Stegplatte 14 ist fest mit der Montageplatte 9 verbunden und weist eine Nockenspur 141 auf, wie dies am besten aus der Seitenansicht nach Figur 7 zu erkennen ist. Die Spur hat von rechts nach links betrachtet zunächst eine horizontale Ausrichtung und sodann einen geneigten nach unten gehenden Teil sowie ein weiteren horizontal ausgerichteten Auslauf. Die Nockenspuren 141 der Stege 14 führen einen Führungsstift 12, der mit einer Kolbenstange 10 im rechten Winkel fest verbunden ist.

Die Kolbenstange 10 ist mit einem Zylinder einer pneumatischen Kolbenzylinderanordnung verbunden, die jedoch nicht gezeigt ist. Es ist jedoch selbstverständlich, dass die Kolbenstange 10 in ihrer axialen Richtung Hin- und Herbewegungen durchführen kann, so wie dies über die Kolbenzylinderanordnung vorgegeben wird, die ihrerseits entsprechend mit Druckluft versorgt wird.

Am freien Ende ist die Kolbenstange 10 mit einem Gabelteil 101 ausgestattet. Die Gabelöffnung ist so dimensioniert worden, dass dort ein Schieber 13 mit seinem rechtsseitigen Ende Aufnahme findet. Im zusammengebauten Zustand geht der Stift 12 von links gesehen durch die Nockenspur 141 des Steges 14 und sodann durch den einen Teil der Gabel und weiterhin durch den Keil 13, darauf folgend durch den anderen Teil der Gabel 101 und schließlich durch den rechtsseitigen Steg 14 hindurch. Mit Hilfe dieser Konstruktion ist es möglich, Hin- und Herbewegungen der Kolbenstange 10 auf den Schieber 13 zu übertragen, wobei der Schieber 13, wenn nämlich der Stift 12 die Nockenspur 141 entlang geht, zusätzlich auch noch Bewegung mit einer Höhenkomponente durchführen und insbesondere auch um die geometrische Achse des Stiftes 12 Schwenkbewegungen ausführen kann.

Der Stift 12 steht zu beiden Seiten von der entsprechenden Stegplatte 14 aus gesehen noch um eine gewisse Strecke nach außen vor, weil der Stift 12 in einer Maulöffnung 165 einer Führungsgabel 16 Aufnahme findet. Die Form und Gestalt der Führungsgabel ist in Figur 5 gezeigt und es ist zu erkennen, dass es sich hierbei zunächst einmal um einen jochartigen Teil 163 handelt, von dem zwei Stege vorstehen. Am freien Ende der Stege befinden sich jeweils die nach unten gerichteten Vorsprünge 161, die mit der Maulöffnung 165 ausgestattet sind.

Am Joch 163 sind zu beiden Seiten Gabelteile 164 vorgesehen, die ebenfalls in Längserstreckung des Gabelteils 16 vorstehen und gewissermaßen eine Maulöffnung bilden, die sich jedoch im Bereich der Öffnung des Maules durch eine nach innen laufende Schrägfläche 162 verengt, deren Funktionsweise später erläutert wird. Es ist festzuhalten, dass die Führungsgabel 16 im wesentlichen aus einem Flachstück besteht und wenn der Stift 12 sich in der Maulöffnung 165 befindet, kann die Führungsgabel 16 entsprechende hin- und hergehende Bewegungen durchführen. Da die Maulöffnung 165 nach unten hin offen ist, bedeutet dies aber auch, dass dann, wenn der Führungsstift 12 aus der Maulöffnung 165 freikommt, die Führungsgabel 16 keine weiteren Bewegungen mehr ausführt, wenngleich der Führungsstift 12 weiterhin hin- und hergehende Bewegungen durchführt, weil er außerhalb des Eingriffsbereichs der Maulöffnung 165 ist.

Unterhalb der Lastauflagefläche 7 befinden sich die Stege 14 mit den Nockenspuren 141, der Schieber 13 und die Führungsgabel 16, wie dies am besten in Figur 1 zu erkennen ist.

Der Schieber 13 hat im wesentlichen die Form eines aufrecht stehenden flachen Quaders, wie dies am besten in Figur 3 zu erkennen ist. Der Schieber 13 hat entsprechend zwei große Seitenflächen, die jeweils mit einem etwa diagonal verlaufenden Führungsnocken 133 versehen sind, wobei die Figur 4 nur den vorderen Führungsnocken 133 erkennen lässt. Der Führungsnocken hat eine nahezu diagonale Erstreckung bei Betrachtung der großen Seitenflächen des Schiebers 13 und ist in seiner Höhe und in seiner Breite so dimensioniert, dass jeweils ein Nocken 133 in der Nockenspur 173 der benachbarten Klaue 171 eingreift. Es ist ersichtlich, dass durch Bewegung des Schiebers im wesentlichen horizontalen Richtung Bewegungen der Klauen in vertikaler Richtung abgeleitet werden können.

In der in Figur 1 gezeigten Position sind jedoch die Führungsnocken 133 nicht im Eingriff mit den Führungsspuren 173. In dieser Position sind die vorderen Abrundungsbereiche 174 der Klauen 171 mit dem linksseitigen vorderen Bereich des Schiebers 13 im Eingriff. Dieser vordere Bereich ist im wesentlichen in Form eines Schiffsbugs ausgestaltet, nämlich mit Schrägflächen 132 zur linken und zur rechten Seite und mit einem spitz vorstehenden Bugteil 131. Auf diese Weise kann erreicht werden, dass bei einer Bewegung des Schiebers 13 von rechts nach links die Spitze des Schiebers 13 zwischen die beiden aneinander liegenden Klauen gelangt und bei einer weitergehenden Bewegung die Klauen von einander wegbewegt und zwar die linksseitig gezeigte Klaue nach links und die rechte zum Teil nicht gezeigte Klaue entsprechend nach rechts.

Die entsprechende Bewegung des Schiebers 13 wird diesem über den Führungsstift 12 erteilt, wenn dieser über die Kolbenstange 10 in der Spur 141 geführt wird.

In den Figuren 1 bis 3 ist noch ein Stößel 175 zu erkennen, wobei bemerkt wird, dass ein entsprechend gelagerter und funktionierender Stößel sich auch in dem nicht erkennbaren Bereich hinter dem Verriegelungskopf 17 befindet. Es handelt sich um einen im wesentlichen zylindrischen Teil, der in horizontaler Richtung in einer Führung angeordnet ist, und zwar so, dass er nur in seiner Achsrichtung, das heißt von links nach rechts bzw. rechts nach links gerichtete Bewegungen durchführen kann. Auf seinem linksseitigen freien Ende ist der Stößel 175 in Figur 1 im Eingriff mit der Eingriffsschräge 162 der Führungsgabel 16 gezeigt. Das rechtsseitige Ende des Stößels 175 ist mit der Seitenfläche 172 der linken Klaue in Eingriff, so dass in der Figur 1 gezeigten Position die linke Klaue 171 sich im Inneren der Ausnehmung des Verriegelungskopfes 17 befindet und nach außen hin nicht vorsteht. Das Entsprechende trifft für die in der Figur 1 nicht sichtbare rechte Klaue zu.

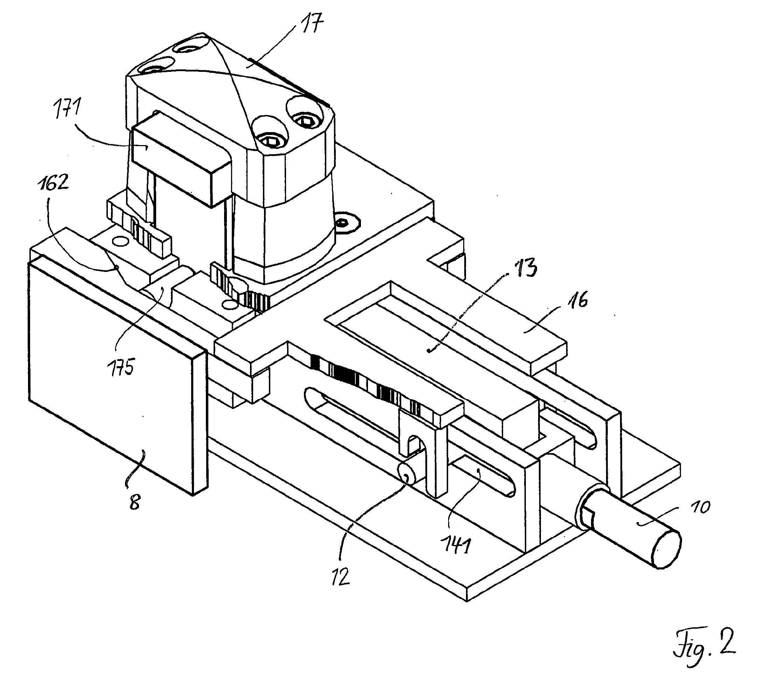

Wird nun die Kolbenstange 10 ausgefahren, das heißt in Achsrichtung von rechts nach links bewegt, so wird diese Bewegung über die Gabel 101 auf den Schieber 13 übertragen. Wenn der Schieber 13 sich jedoch von rechts nach links bewegt und zwar unter Steuerung des Stiftes 12 in dem ersten Teil der Spur 141, wird die Führungsgabel 16 entsprechend nach links bewegt, weil sich der Stift 12 in der Maulöffnung des Vorsprunges 161 befindet. Dadurch kommt der Stift 175 von der Schrägfläche 162 der Gabel 16 frei und könnte Bewegungen von rechts hinten nach links vorn durchführen. Zu diesem Zeitpunkt gelangt die Spitze bzw. die Schrägfläche 131, 132 des Keils 13 an die beiden Abrundungsflächen 174 der Klauen 171 und spreizt diese auseinander. Diese Situation ist in Figur 2 zu erkennen, in der der Führungsstift 12 den horizontalen Teil der Spur 141 verlassen hat und auf dem nach unten abfallenden Teil der Spur 141 weiterbewegt wird. Dies bedeutet, dass die Führungsgabel 16 nicht weiter nach links bewegt werden kann und der Stößel 175 seine Anlage findet an der Innenfläche der Führungsgabel 16 und zwar bei Betrachtung der Figur 2 des linken Teils der Führungsgabel.

Durch eine weitere Bewegung des Schiebers 13 von rechts nach links, werden die Klauen 171 weiterhin nach unten bewegt und gelangen schließlich in die Figur 3 gezeigte Verriegelungslage. In dieser Lage besteht zwischen den Vorsprüngen der Klauen 171 und der Lastauflagefläche 7 ein kleiner Abstand, der groß genug ist, um die Materialdicke des Eckbeschlages eines Containers aufzunehmen. Das heißt, dass der Eckbeschlag und damit der Container fest verriegelt sind. Diese Verriegelungslage ist in Figur 3 gezeigt und es ist zu erkennen, dass der Stift 12 das linksseitige Ende der Spur 141 des Steges 14 erreicht hat.

Soll der Container wieder frei gegeben werden, so wird zunächst einmal die Kolbenstange 10 eingefahren und über diese von links nach rechts führende Bewegung wird der Stift 12 ebenfalls nach rechts bewegt, was auch für den Schieber 13 zutrifft. Bei einer weiteren Bewegung gelangt der Stößel 175 in Anschlaglage mit der in Eingriffschräge 162 und auf diese Art und Weise wird der Stößel 175 von links nach rechts bewegt und er drückt entsprechend die linke Klaue 171 ebenfalls von links nach rechts. Gleichzeitig wird über den Eingriff der Führungsnocken 133 mit der Nut 173 in der Klaue 171 die Klaue 171 wieder nach oben bewegt und in die Figur 1 gezeigte Lage gebracht. In dieser Position kann ein zuvor aufgesetzter Container nach oben abgenommen werden bzw. ein Container von oben her aufgesetzt werden.

In der Beschreibung ist die Funktionsweise unter Bezugnahme auf die Teile gerichtet worden, die sich links von einer Symmetrieebene befinden. Entsprechende Funktionen gelten für die rechtsseitig befindlichen Teile, insbesondere die Funktionselemente 175, 133 und 173.

Wesentlich für die vorliegende Erfindung ist, dass mit Hilfe einer einfachen hin- und hergehenden Bewegung einer Kolbenstange 10 die erforderlichen Bewegungen durchgeführt werden, um einen Container für den Transport zu sichern und auch wieder freizugeben.

## Patentansprüche

1. Vorrichtung zur Betätigung einer Verriegelung eines Verriegelungskopfes auf einem Fahrzeug mit einem Eckbeschlag eines zu transportierenden Containers, aufweisend eine pneumatische Kolbenzylinderanordnung, deren Kolbenstange mit den Klauen des Verriegelungskopfes antriebsmäßig verbunden ist, um diese aus der eingefahrenen Lage (Fig. 1) in die ausgefahrene Lage (Fig. 2) und von dort in die Riegelstellung (Fig. 3) und wieder zurückzubringen, **dadurch gekennzeichnet, dass** an der Kolbenstange (10) in axialer Verlängerung ein Schieber (13) angebracht ist, und dass der Schieber in Ausfahrrichtung der Kolbenstange (10) die Klauen (171) aus der eingefahrenen Lage nach außen und sodann nach unten drückt, wobei die Klauen (171) und der Schieber (13) über Nocken (133) und Nockenspuren (173) im Eingriff sind, um Axialbewegungen in Vertikalbewegungen umzuwandeln.
